# FASCICULE DE BREVET EUROPEEN

(11) **EP 1 979 278 B1**
(45) Date de publication et mention de la délivrance du brevet: **13.03.2013**
(21) Numéro de dépôt: 07717782.2
(22) Date de dépôt: 08.01.2007
(51) Int. Cl.: H05B 3/74, C03B 13/08

(54) **PLAQUES VITROCERAMIQUES, LEUR PROCEDE DE FABRICATION ET TABLES DE CUISSON EQUIPEES DE CES PLAQUES**
GLAS-KERAMIK-PLATTEN, VERFAHREN ZU IHRER HERSTELLUNG UND KOCHTÖPFE MIT DIESEN PLATTEN
GLASS-CERAMIC PLATES, THEIR MANUFACTURING PROCESS, AND COOKTOPS EQUIPPED WITH THESE PLATES

(30) Priorité: 16.01.2006 FR 0650133
(43) Date de publication de la demande: 15.10.2008
(73) Titulaire: Eurokera S.N.C., 02405 Chateau-Thierry Cedex (FR)
(72) Inventeur: TALLET, Laurent, F-77140 Montcourt Fromonville (FR); DUMONT, Carol, F-77140 Nemours (FR); HARMAND, Hélène, F-75011 Paris (FR); CHARPENTIER, Bertrand, Greer, South Carolina 29650 (US)
(74) Mandataire: Goldenberg, Virginie Isabelle
(86) Numéro de dépôt international: PCT/FR2007/050619
(87) Numéro de publication internationale: WO 2007/080343

(56) Documents cités:
- EP-A2- 1 357 089
- WO-A-2005/035452
- DE-B3- 10 360 593
- DE-U1- 9 010 072
- FR-A- 2 074 775

## Description

La présente invention concerne les plaques de cuisson réalisées en vitrocéramique ou en un autre matériau analogue résistant à haute température et présentant un coefficient de dilatation nul ou quasi-nul.

Ces plaques, planes ou essentiellement planes, sont destinées à venir recouvrir des éléments ou foyers de cuisson afin de constituer des tables de cuisson. Les foyers de cuisson sont de différents types, en particulier : éléments de cuisson électriques, tels que les éléments de chauffage par résistance électrique ou éléments radiants ou lampes halogènes ; inducteurs ou foyers à induction concourant à un chauffage par induction ; et brûleurs à gaz. Les foyers de cuisson d'une même table de cuisson peuvent être d'un même type ou de types différents, tels qu'éléments radiants et brûleurs à gaz, inducteurs et brûleurs à gaz, éléments radiants et inducteurs, etc (tables de cuisson dites « mixtes »).

Les tables de cuisson comportent également des moyens de commande et de régulation permettant de faire varier la puissance des foyers (lesquels sont la plupart du temps au nombre de quatre) et éventuellement des voyants divers.

Ces plaques de cuisson en vitrocéramique ou similaire connaissent un immense succès et sont très largement répandues notamment car elles bénéficient d'un aspect extérieur plus moderne que les traditionnelles plaques électriques et d'une facilité de nettoyage du fait que la surface d'une plaque vitrocéramique est plane ou essentiellement plane.

Par « essentiellement plane », on entend que la plaque en vitrocéramique est plate mais peut aussi comporter en certains endroits des déformations consistant notamment en des concavités ou zones en creux, ou en des bossages ou reliefs ou vagues, ces déformations étant généralement obtenues par déformation de plaques planes en sortie du four de fusion ou en reprise, par exemple par pliage, bombage avant céramisation, affaissement (naturel ou assisté) pendant la céramisation, etc.

On peut notamment citer les plaques du type de celles décrites dans la demande de brevet français FR-A-2 773 873 qui comportent au moins une concavité sous laquelle est placé un foyer de cuisson, le bord périphérique supérieur de la concavité pouvant par ailleurs être surélevé par rapport au plan de la plaque. On peut également citer les plaques selon EP-A-0 930 806 qui comportent des creux et des reliefs permettant le repérage tactile d'une zone et/ou d'une fonction déterminées de la plaque par un utilisateur non-voyant, ou les plaques selon WO 01/38796 qui possèdent des parties déformées constituant les parties hautes des chambres de combustion de brûleurs à gaz, ces parties déformées présentant des fentes de sortie des flammes et d'arrivée d'air.

Pour réaliser les moyens de commande et de régulation permettant de faire varier la puissance des éléments de cuisson, les boutons traditionnels fixés sur des axes traversant des trous pratiqués dans la plaque sont maintenant généralement remplacés par des touches sensitives électroniques ou touches capacitives, actionnées par le contact d'un doigt. Le moyen de commande et de régulation pour un moyen de cuisson ou de maintien en température consiste notamment en une ou plusieurs paires de touches dont l'une sert à incrémenter la puissance délivrée au foyer associé à chaque contact du doigt de l'utilisateur sur cette touche, tandis que l'autre sert, à l'inverse, à diminuer pas à pas la puissance de ce même foyer. On peut aussi prévoir une multiplicité de touches correspondant à des puissances de chauffage distinctes.

Par ailleurs, les plaques vitrocéramiques comportent généralement une surface inférieure dotée de picots afin, notamment, d'améliorer la résistance mécanique de la plaque et de limiter la vision à l'intérieur du caisson tout en évitant le cas échéant que l'utilisateur soit ébloui lors de l'utilisation. La surface supérieure reste elle de préférence lisse pour permettre le cas échéant un bon contact avec les récipients de cuisson et transférer la chaleur dans les meilleures conditions et pour la facilité de nettoyage et l'esthétique.

La fabrication des plaques vitrocéramiques comporte d'une manière générale les étapes suivantes :
- Fusion-laminage : dans un four de fusion, on fond le verre de composition choisie pour former la vitrocéramique, puis on lamine le verre fondu en un ruban ou feuille standard en faisant passer le verre fondu entre deux rouleaux de laminage, généralement un rouleau supérieur à surface lisse dans le but d'obtenir une surface supérieure lisse pour la plaque et un rouleau inférieur gravé en négatif, de façon à obtenir une surface inférieure de plaque dotée d'un réseau de bosses ou picots, par exemple semi-sphériques ou semi-elliptiques;
- Découpe du ruban de verre aux dimensions souhaitées ; en règle générale, deux plaques seront découpées dans un même ruban ;
- Céramisation : on procède à une cuisson des plaques découpées (et le cas échéant préalablement revêtues de zones décoratives et/ou fonctionnelles) suivant le profil thermique choisi pour transformer le verre en matériau polycristallin appelé « vitrocéramique » dont le coefficient de dilatation est nul ou quasi-nul et qui résiste à un choc thermique pouvant aller jusqu'à 700°C, tout en cuisant le cas échéant tout ou partie du revêtement (par exemple l'émail), permettant ainsi son accrochage sur le substrat ;
- Le cas échéant, revêtement par une ou plusieurs couches et/ou zones fonctionnelles et/ou décoratives, avant et/ou après céramisation selon le type de revêtement.

Dans le cas où la plaque de vitrocéramique comporte des zones mises en forme (surélevées ou en creux), le procédé de fabrication comprendrait une opération, pouvant être effectuée à tout moment de ce procédé classique, d'effondrement, de moulage ou de pressage avec utilisation d'un support ou de surfaces de moulage ou pressage ayant la géométrie désirée, pourvu que le matériau qui constitue la plaque soit à une température suffisamment élevée pour en permettre la déformation plastique.

Plus récemment, des plaques vitrocéramiques sans picots en face inférieure ont également été proposées, permettant d'élargir la gamme des produits traditionnels, ces plaques présentant un aspect plus fonctionnel de par un revêtement de peinture ou de couche réfléchissante (obtenue avec des pigments à effet par exemple), avantageusement en face inférieure, permettant ainsi de réaliser des zones contrastées esthétiques (contraste mat/brillant, effet moucheté, piqueté...). De telles plaques font l'objet notamment de la demande de brevet français n°05 53709 déposée le 5 décembre 2005.

Poursuivant ses recherches, la Société déposante a découvert qu'un tel aspect plus fonctionnel et esthétique, recherché conformément à la demande de brevet précitée, pouvait être obtenu de manière plus simple que par l'application de couches diverses sur la plaque vitrocéramique.

Elle a en effet pu montrer qu'il est possible de réaliser des plaques vitrocéramiques dont l'état de surface de base (ou de référence) pouvait être modifié par action sur le verre lui-même (action dans la masse) au cours de la fabrication de la plaque, et sans opération supplémentaire: une telle modification est obtenue par transfert d'un état de surface différencié (avantageusement différenciation légère comme précisé ultérieurement) créé sur l'un des rouleaux de laminage, ou les deux, à la surface du ruban de verre en sortie de ces rouleaux.

En cherchant une solution au problème posé précédent, la Société déposante a donc mis au point un nouveau procédé permettant d'obtenir plus facilement un contraste de type mat-brillant ou satiné-brillant sans opération coûteuse ou complexe supplémentaire et sans risque de blesser ou former des microfractures à la surface de la vitrocéramique (risques pouvant découler de traitements, notamment dans la plaque vitrocéramique, opérés en reprise après fabrication de la vitrocéramique), donc sans fragiliser celle-ci, laquelle peut donc conserver ses propriétés mécaniques et sa facilité de nettoyage, aucune porosité n'étant en outre formée qui pourrait donner prise à un accrochage de corps gras ou laisser des traces de doigts.

La ou les régions ainsi imprimées à chaud de la plaque de céramique par une surface ou partie de surface d'un rouleau de laminage subissent, après le laminage puis pendant la céramisation, des évolutions conduisant à un aspect très particulier d'aspérités sans porosités, imperceptibles ou pratiquement imperceptibles au toucher mais permettant d'obtenir des aspects contrastés pour former un décor ou donner des indications sans nuire à la facilité de nettoyage et à la bonne répartition de la chaleur de la plaque.

Il va de soi que de telles impressions sur la plaque vitrocéramique, obtenues conformément à la présente invention, peuvent aussi être combinées avec tout moyen de marquage connu : émail, peinture, couche réfléchissante... ainsi qu'avec la présence de picots, pouvant ainsi procurer bon nombre d'effets attrayants pour le consommateur, tout en conservant les propriétés mécaniques requises.

La présente invention concerne tous les types de plaques qui viennent d'être décrits, lesquelles pourraient le cas échéant présenter des perçages et/ou éventuellement des reliefs et/ou des creux, dès l'instant où elles sont dans leur ensemble ou leur majorité planes.

La présente invention a donc d'abord pour objet l'objet de la revendication 1. Notamment, elle a pour objet une plaque vitrocéramique (généralement plane ou sensiblement plane), ladite plaque étant par exemple destinée à venir équiper une table de cuisson, qui comporte sur au moins l'une de ses faces, au moins un état de surface différencié, ledit état de surface différencié étant formé dans la masse de la (plaque) vitrocéramique nue . Aussi, la rugosité moyenne Rₐ de l'état de surface différencié est choisie de façon à être égale à au moins 1,5 fois, et au plus à 5 fois, la rugosité moyenne Rₐ de la surface lisse (la rugosité moyenne Ra est définie comme la moyenne arithmétique des écarts du profil de rugosité filtré, de la ligne moyenne au sein de la course de mesure ou longueur d'évaluation, selon en particulier la norme ISO/DIN 4287/1)..

Le document DE10360593 montre le préambule de le revendication 1. Par état de surface différencié, on entend que la plaque présente au moins une zone d'aspect contrasté par rapport à l'aspect lisse habituel des plaques vitrocéramiques, cet état de surface différencié par rapport à la surface lisse de base de la vitrocéramique pouvant se traduire par exemple par un effet satiné, ou mat, ou en filigrane, etc. L'état de surface différencié formé sur une face de la plaque peut couvrir la totalité ou la quasi-totalité de ladite face. Il peut aussi et de préférence couvrir une ou plusieurs zones de ladite face, formant par exemple un décor, en particulier à motifs, et/ou des indications (logo, marque, symbole,...) et/ou marquant l'emplacement d'éléments fonctionnels, etc. On peut également prévoir que l'état de surface différencié peut contribuer au masquage d'éléments sous-jacents au repos tout en permettant la détection des éléments de chauffage et afficheurs éventuels lorsqu'ils sont en service, etc.

L'état de surface différencié par rapport à une surface lisse peut être lui aussi dans une certaine mesure lisse ou uniforme (en particulier non détectable au toucher par rapport, le cas échéant, au reste, lisse, de la surface de la plaque), tout en présentant cependant un aspect (détectable au moins visuellement avantageusement) différencié. En particulier, l'état de surface différencié peut résulter préférentiellement de micro-rugosités sans angles vifs, constituant des zones plus diffusantes que des zones lisses, ces zones pouvant être imperceptibles au toucher tout en étant perceptibles visuellement sous certaines inclinaisons de la plaque, du fait qu'elles sont à variations microscopiques de rugosité.

Généralement, la plaque selon l'invention présente, en au moins une face (généralement sa face supérieure), au moins une zone de fond lisse (présentant un état de surface lisse traditionnel) et au moins une zone d'état de surface différencié (par rapport à ladite surface lisse) selon l'invention, formant une zone de signalisation et/ou de décor, ou inversement présente une zone de fond différenciée par rapport à la zone de signalisation et/ou de décor lisse.

Selon un mode de réalisation avantageux de la présente invention, l'état de surface différencié présente par rapport à la surface lisse (ou à une surface lisse habituelle) un dénivelé inférieur à 1 mm, de préférence inférieur à 500 µm, de façon particulièrement préférée inférieure à 5 µm (par exemple de l'ordre de 1 à 5 µm), de façon notamment à ne pas perturber l'uniformité du chauffage, éviter de constituer des butées pour les ustensiles de cuisson, éviter un éventuel dépôt de salissures, etc ;

Comme explicité ultérieurement, l'état de surface différencié (ou le cas échéant cette rugosité particulière) est avantageusement obtenu à chaud lors de la fabrication de la plaque par application à la surface de celle-ci d'un élément comportant l'état de surface recherché gravé en négatif, en particulier est obtenu lors du laminage à chaud du verre fondu entre deux rouleaux de laminage dont la surface lisse d'origine a été modifiée pour comporter l'état de surface différencié gravé en négatif afin de former ledit état de surface par transfert du rouleau sur la surface correspondante de la plaque.

De préférence, l'état de surface différencié est choisi imperceptible au toucher et/ou l'état de surface différencié est tel qu'il n'est pas sensible aux salissures et/ou qu'il ne laisse pas de traces de doigts.

Comme indiqué précédemment, la plaque vitrocéramique selon l'invention peut éventuellement comporter des picots sur sa face inférieure. Egalement, elle peut comporter sur au moins une partie de l'une de ses faces au moins un revêtement d'une peinture et/ou d'un émail et/ou d'une couche réfléchissante, etc.

La présente invention porte également sur un procédé de fabrication de plaques vitrocéramiques telles que définies ci-dessus, dans lequel le laminage du verre fondu (en un ruban ou feuille) est effectué en faisant passer le verre fondu entre des rouleaux de laminage dont au moins un a été modifié pour présenter, gravé en négatif, l'état de surface différencié recherché (pour la face de la plaque vitrocéramique qui lui correspond), afin d'obtenir ledit état de surface différencié par transfert sur la matière en feuille ou en ruban.

Ce laminage particulier peut être mis en place dans les procédés de fabrication des plaques vitrocéramiques habituels sans changement ou perturbation des autre étapes de traitement ; pour mémoire, le laminage s'inscrit, en particulier, dans les étapes suivantes : dans un four de fusion, on fond le verre de composition choisie pour former la vitrocéramique, puis on effectue le laminage du verre fondu en un ruban ou feuille standard et on découpe le ruban de verre aux dimensions souhaitées. Les plaques obtenues sont ensuite céramisées de manière connue en soi, la céramisation comprenant généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes, puis un refroidissement rapide jusqu'à la température ambiante.

Le procédé comprend ensuite généralement une autre opération de découpe, suivie éventuellement par une opération de façonnage (meulage, biseautage...). Le procédé intègre également généralement des opérations de décoration (par exemple par sérigraphie, pulvérisation, etc), ces opérations pouvant intervenir selon les cas avant et/ou après la céramisation.

L'invention porte également sur un appareillage (ou dispositif) pour la fabrication d'une plaque vitrocéramique telle que définie ci-dessus, cet appareillage comportant un dispositif (ou organe) de laminage constitué par au moins un rouleau supérieur et un rouleau inférieur (entre lesquels on fait passer le verre fondu à laminer), caractérisé par le fait qu'au moins un rouleau a été modifié pour présenter, gravé en négatif, l'état de surface différencié recherché (pour la face de la plaque vitrocéramique qui lui correspond).

La modification de l'état de surface d'un rouleau peut notamment avoir été effectuée par grenaillage (ou sablage ou satinage), notamment à l'aide de grains d'alumine de type corindon et/ou de billes de verre, d'une granulométrie par exemple de l'ordre de 10 à 500 µm (par exemple de 150 µm en moyenne), l'état de surface recherché étant déterminé notamment par la nature et la granulométrie du grenaillage, la vitesse de rotation du rouleau lors du grenaillage et la durée de ce dernier. Dans le cas où l'état de surface différencié est formé sur des parties seulement du rouleau, celles-ci sont par exemple délimitées par des évidements pratiqués dans une feuille de pochoir entourant le rouleau.

L'invention porte aussi sur un procédé de fabrication d'un rouleau de laminage destiné à équiper l'appareillage tel que défini ci-dessus, caractérisé en ce que l'on prend un rouleau (généralement métallique) cylindrique à surface lisse, revêtu (ou entouré) par au moins une feuille pochoir (généralement autocollante) comportant des évidements correspondant aux emplacements où l'on souhaite effectuer un grenaillage (la feuille pochoir pouvant également être éventuellement revêtue par au moins un papier de protection externe; que l'on enlève avant grenaillage, et/ou être positionnée sur un premier papier support, éclatant lors du grenaillage aux emplacements des évidements, revêtant le rouleau, et/ou le rouleau pouvant être traité directement sans feuille pochoir sur toute sa surface), on fait tourner le rouleau autour de son axe (à raison par exemple de 50 à 200 tours par minute), et l'on projette simultanément (à l'aide par exemple d'une buse alimentée en air comprimé, sous une pression notamment de l'ordre de 2 à 5 bars) le matériau de grenaillage le long d'une génératrice dudit rouleau. L'appareil de projection du matériau de grenaillage est préférentiellement mobile en translation, à une vitesse notamment de l'ordre de 0.01 à 1 m/min, de préférence de 0.05 à 0.5 m/min, pour effectuer des passes ou va-et-vient sur toute la longueur du rouleau, pendant une durée de l'ordre de 1 à 100 minutes (par exemple de l'ordre de 20 minutes).

Après le grenaillage, on retire le revêtement (feuille pochoir et le cas échéant fragments d'autres feuilles telles que feuille interne), et on lave le rouleau (par exemple à l'alcool).

La présente invention porte enfin sur une table de cuisson notamment de type à éléments radiants, à éléments halogènes, à induction, à brûleurs à gaz, ou de type mixte, ladite table de cuisson étant équipée d'une plaque vitrocéramique telle que définie ci-dessus.

Pour mieux illustrer l'objet de la présente invention, on va maintenant en décrire des modes de réalisation particuliers avec référence au dessin annexé sur lequel :
- la Figure 1 est une vue schématique en coupe partielle d'un rouleau de laminage supérieur à la périphérie duquel est appliqué un dispositif de pochoir en vue de modifier, par grenaillage, des parties de sa surface ;
- la Figure 2 est une vue analogue à la Figure 1, le dispositif de pochoir étant réalisé selon une variante ;
- la Figure 3 est une vue partielle, de la feuille de pochoir appliquée autour du rouleau de la Figure 1; et
- la Figure 4 est une vue partielle correspondant à la Figure 3 de la surface supérieure de la plaque de cuisson comportant des régions à état de surface différencié.

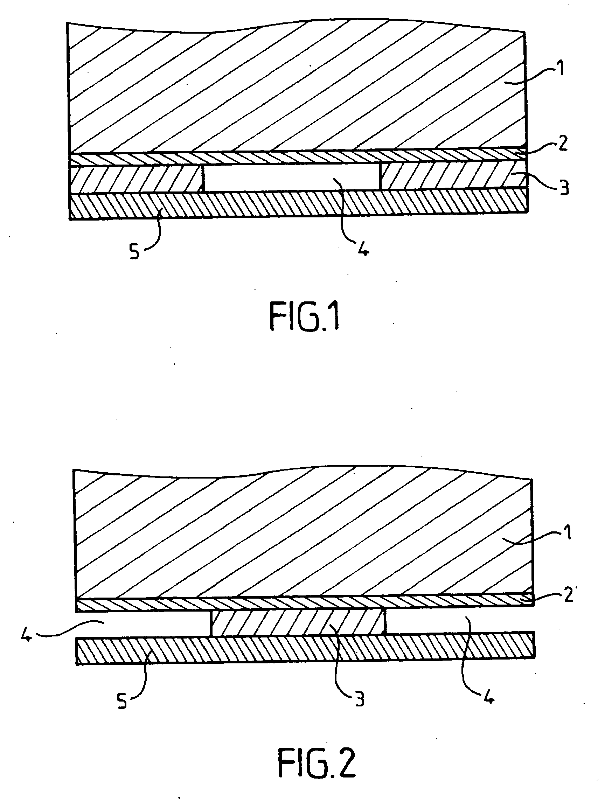

Sur la Figure 1, on a représenté une vue fragmentaire d'un rouleau de laminage 1 à surface lisse autour duquel sont disposées successivement, en vue du grenaillage, les feuilles suivantes (représentées sur la figure volontairement grossies) :
- une feuille interne 2 très fine (de protection ou de fixation, cette feuille pouvant également être retirée pour appliquer la feuille pochoir directement sur le verre) ne résistant pas au grenaillage ;
- une feuille pochoir 3, auto-collante, en papier, matière plastique ou caoutchouc, résistant au grenaillage et comportant des évidements 4 ; et
- une feuille 5 de protection externe, pelable, que l'on enlève avant le grenaillage.

Le rouleau 1 est un rouleau cylindrique métallique, par exemple de 1 à 2 m de long et d'un diamètre de 10 à 50 cm. Les feuilles 2, 3 et 5 sont enroulées sur toute sa longueur.

Pour effectuer le grenaillage, on projette sur le rouleau 1 doté de la feuille 3 (et le cas échéant de la feuille 2), une grenaille constituée notamment de corindon d'une granulométrie de l'ordre de 150 µm. La pression de jet de grenaille sortant par une buse alimentée en air comprimé est de l'ordre de 4 bars ; le rouleau 1 tourne à environ 120 tours par minute et la buse est déplacée en va-et-vient le long du rouleau à une vitesse de 0.05 à 0.5 m/min (par exemple 1 passe toutes les 20 minutes, chaque aller/retour constituant une passe). En environ 4 à 15 passes, on assure la formation d'un état de surface dit satiné sur les parties du rouleau 1 se trouvant en regard des évidements 4.

Lors du grenaillage, la feuille 2, très fine, éclate dans les emplacements correspondants aux évidements 4.

Une fois le grenaillage terminé, on retire la feuille 3 et les fragments de feuille 2 et on lave le rouleau 1 à l'alcool.

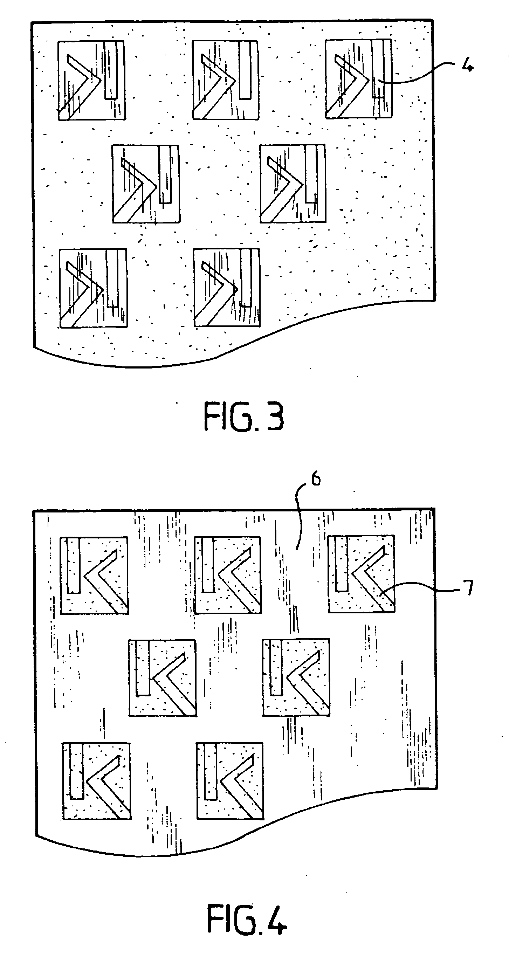

Dans l'exemple représenté, les évidements 4 (Figures 1 et 3) sont constitués par des motifs disposés en quinconce ayant chacun la forme de l'image dans un miroir d'une lettre « K » stylisée, ce qui conduira à l'aspect de la plaque vitrocéramique représenté sur la Figure 4 : fond lisse 6 et zones « K » 7 satinées.

Sur la Figure 2, on a représenté un autre pochoir qui conduirait à une plaque vitrocéramique ayant un aspect inverse de celui de la Figure 4 : fond satiné et zones « K » lisses.

On a donc une plaque vitrocéramique transparente dont la face supérieure comporte les motifs « K », à partir d'un verre ayant par exemple la composition décrite dans la demande européenne EP 0 437 228, le rouleau de laminage supérieur étant celui de la figure 1 et le rouleau de laminage inférieur étant un rouleau classique.

Les plaques de verre sont par exemple céramisées sur des grilles céramiques selon un cycle de céramisation comprenant les étapes suivantes :
- élévation de la température à raison de 50 -80 °C/ minute jusqu'au domaine de nucléation, généralement situé au voisinage du domaine de transformation du verre;
- traversée de l'intervalle de nucléation (670 -800°C) en une vingtaine de minutes avec maintien en température de quelques minutes ;
- élévation de la température en 15 à 30 minutes jusqu'à la température T du palier de céramisation de l'ordre de 900-960°C ;
- maintien de la température T du palier de céramisation pendant un temps t de l'ordre de 10-25 minutes ;
- refroidissement rapide jusqu'à la température ambiante.

Il est bien entendu que les modes de réalisation particuliers décrits ci-dessus ont été donnés à titre indicatif et non limitatif et que des modifications et variantes peuvent être apportées sans que l'on s'écarte pour autant du cadre de la présente invention.

Les plaques selon l'invention peuvent notamment être utilisées avec avantages pour réaliser une nouvelle gamme de plaques de cuisson pour cuisinières ou tables de cuisson.

## Revendications

1. Plaque vitrocéramique destinée par exemple à venir équiper une table de cuisson, qui comporte sur au moins l'une de ses faces, au moins un état de surface différencié, ledit au moins un état de surface différencié étant formé dans la masse de la vitrocéramique nue, **caractérisé en ce que** la rugosité moyenne Rₐ dudit au moins un état de surface différencié est choisie de façon à être égale à au moins 1,5 fois, et au plus à 5 fois, la rugosité moyenne Rₐ de la surface lisse.

2. Plaque vitrocéramique selon la revendication 1, **caractérisée en ce que** ledit au moins un état de surface différencié résulte de microrugosités sans angles vifs.

3. Plaque vitrocéramique selon l'une des revendications 1 à 2, **caractérisée en ce que** ledit au moins un état de surface différencié présente par rapport à la surface lisse un dénivelé inférieur à 1 mm, de préférence inférieur à 500 µm, de façon particulièrement préférée inférieure à 5 µm.

4. Plaque vitrocéramique selon l'une des revendications 1 à 3, **caractérisée en ce que** ledit au moins un état de surface différencié est obtenu à chaud lors de la fabrication de la plaque par application à la surface de celle-ci d'un élément comportant ledit au moins un état de surface recherché gravé en négatif, en particulier est obtenu lors du laminage à chaud du verre fondu entre deux rouleaux de laminage dont la surface lisse d'origine a été modifiée pour comporter ledit au moins un état de surface différencié gravé en négatif afin de former ledit au moins un état de surface par transfert du rouleau sur la surface correspondante de la plaque.

5. Table de cuisson notamment de type à éléments radiants, à éléments halogènes, à induction, à brûleurs à gaz, ou de type mixte, ladite table de cuisson étant équipée d'une plaque vitrocéramique telle que définie dans l'une des revendications 1 à 4.

6. Procédé de fabrication de plaques vitrocéramiques telles que définies dans l'une des revendications 1 à 4, dans lequel le laminage du verre fondu est effectué en faisant passer le verre fondu entre des rouleaux de laminage dont au moins un a été modifié pour présenter, gravé en négatif, ledit au moins un état de surface différencié recherché afin d'obtenir ledit au moins un état de surface différencié par transfert sur la matière en feuille ou en ruban.

7. Appareillage pour la fabrication d'une plaque vitrocéramique telle que définie dans l'une des revendications 1 à 4, cet appareillage comportant un dispositif de laminage constitué par au moins un rouleau supérieur et un rouleau inférieur, **caractérisé en ce qu'**au moins un rouleau a été modifié pour présenter, gravé en négatif, ledit au moins un état de surface différencié recherché pour ladite plaque vitrocéramique, cet au moins un état de surface différencié de ladite plaque vitrocéramique étant tel que la rugosité moyenne Rₐ dudit état de surface différencié est égale à au moins 1,5 fois, et au plus à 5 fois, la rugosité moyenne Rₐ de la surface lisse.

8. Appareillage selon la revendication 6, **caractérisé en ce que** la modification de l'état de surface d'un rouleau est effectuée par grenaillage ou sablage ou satinage, notamment à l'aide de grains d'alumine de type corindon et/ou de billes de verre, d'une granulométrie par exemple de l'ordre de 10 à 500 µm.

## Claims

1. Glass-ceramic plate designed for example to be fitted to a cooktop, which comprises, on at least one of its faces, at least one differentiated surface finish, said at least one differentiated surface finish being formed in the body of the bare glass-ceramic, **characterized in that** the mean roughness Rₐ of said at least one differentiated surface finish is chosen so as to be equal to at least 1.5 times, and at most 5 times, the mean roughness Rₐ of the smooth surface.

2. Glass-ceramic plate according to Claim 1, **characterized in that** said at least one differentiated surface finish results from microroughnesses without sharp angles.

3. Glass-ceramic plate according to either of Claims 1 and 2, **characterized in that** said at least one differentiated surface finish has, in relation to the smooth surface, a difference in levels of less than 1 mm, preferably less than 500 µm and in a particularly preferred manner less than 5 µm.

4. Glass-ceramic plate according to one of Claims 1 to 3, **characterized in that** said at least one differentiated surface finish is obtained hot as the plate is produced, by application to the surface thereof of an element bearing said at least one desired surface finish engraved as a negative and is obtained in particular during hot calendering of molten glass between two calendering rollers of which the original smooth surface has been modified in order to bear said at least one engraved differentiated surface finish as a negative in order to form said at least one surface finish by transfer from the roller onto the corresponding surface of the plate.

5. Cooktop, in particular of the type with radiant elements, halogen elements, induction elements, gas burners, or elements of a mixed type, said cooktop being equipped with a glass-ceramic plate as defined in one of Claims 1 to 4.

6. Method for producing glass-ceramic plates as defined in one of Claims 1 to 4, in which calendering of molten glass is carried out by passing the molten glass between calendering rollers, at least one of which has been modified to have, engraved as a negative, said at least one desired differentiated surface finish so as to obtain said at least one differentiated surface finish by transfer onto the material in the form of a sheet or strip.

7. Apparatus for producing a glass-ceramic plate as defined in one of Claims 1 to 4, this apparatus comprising a calendering device consisting of at least an upper roller and a lower roller, **characterized in that** at least one roller has been modified so as to have, engraved as a negative, said at least one desired differentiated surface finish, this said at least one differentiated surface finish of said glass ceramic plate being such that the mean roughness Rₐ of said differentiated surface finish is equal to at least 1.5 times, and at the most 5 times, the mean roughness Rₐ of the smooth surface.

8. Apparatus according to Claim 16, **characterized in that** modification of the surface finish of a roller is carried out by grit-blasting or sandblasting or satin finishing, in particular with the aid of alumina grains of the corundum type and/or glass beads, with a particle size for example of the order of 10 to 500 µm

## Patentansprüche

1. Glaskeramikplatte, beispielsweise zur Ausstattung eines Kochfeldes, die auf wenigstens einer ihrer Seiten wenigstens einen differenzierten Oberflächenzustand aufweist, wobei der wenigstens eine differenzierte Oberflächenzustand in der Masse der rohen Glaskeramik ausgebildet wird, **dadurch gekennzeichnet, dass** die mittlere Rauheit Rₐ des wenigstens einen differenzierten Oberflächenzustandes derart gewählt ist, dass sie gleich wenigstens dem 1,5-fachen und höchstens dem 5-fachen der mittleren Rauheit Rₐ der glatten Oberfläche ist.

2. Glaskeramikplatte nach Anspruch 1, **dadurch gekennzeichnet, dass** der wenigstens eine differenzierte Oberflächenzustand sich aus der Mikrorauheit ohne scharfe Kanten ergibt.

3. Glaskeramikplatte nach einem der Ansprüche 1 bis 2, **dadurch gekennzeichnet, dass** der wenigstens eine differenzierte Oberflächenzustand im Vergleich zu der glatten Oberfläche einen Höhenunterschied von weniger als 1 mm, vorzugsweise weniger als 500 µm, besonders bevorzugt weniger als 5 µm aufweist.

4. Glaskeramikplatte nach einem der Ansprüche 1 bis 3, **dadurch gekennzeichnet, dass** der wenigstens eine differenzierte Oberflächenzustand unter Wärme bei der Herstellung der Platte durch Anlegen an deren Oberfläche eines Elements, das den wenigstens einen gewünschten Oberflächenzustand in Negativprägung aufweist, erhalten wird, insbesondere beim Warmwalzen des geschmolzenen Glases zwischen zwei Walzrollen erhalten wird, deren glatte Ausgangsfläche modifiziert worden ist, um den wenigstens einen differenzierten Oberflächenzustand in Negativprägung aufzuweisen, um den wenigstens einen Oberflächenzustand durch Übertragen von der Rolle auf die entsprechende Oberfläche der Platte auszubilden.

5. Kochfeld, insbesondere vom Typ mit Strahlungselementen, Halogenelementen, Induktion, Gasbrennern oder vom gemischten Typ, wobei das Kochfeld mit einer Glaskeramikplatte, wie sie in einem der Ansprüche 1 bis 4 definiert ist, ausgestattet ist.

6. Verfahren zur Herstellung von Glaskeramikplatten, wie sie in einem der Ansprüche 1 bis 4 definiert sind, wobei das Walzen des geschmolzenen Glases dadurch vollzogen wird, dass man das geschmolzene Glas zwischen Walzrollen durchlaufen lässt, von denen wenigstens eine modifiziert worden ist, um in Negativprägung den wenigstens einen gewünschten differenzierten Oberflächenzustand aufzuweisen, um den wenigstens einen differenzierten Oberflächenzustand durch Übertragen auf das folien- oder bandförmige Material zu erhalten.

7. Anlage zur Herstellung einer Glaskeramikplatte, wie sie in einem der Ansprüche 1 bis 4 definiert ist, wobei diese Anlage eine Walzvorrichtung umfasst, die durch wenigstens eine obere Rolle und eine untere Rolle gebildet ist, **dadurch gekennzeichnet, dass** wenigstens eine Rolle modifiziert worden ist, um in Negativprägung den wenigstens einen für die Glaskeramikplatte gewünschten differenzierten Oberflächenzustand aufzuweisen, wobei dieser wenigstens eine differenzierte Oberflächenzustand der Glaskeramikplatte derart ist, dass die mittlere Rauheit Rₐ des differenzierten Oberflächenzustandes gleich wenigstens dem 1,5-fachen und höchstens dem 5-fachen der mittleren Rauheit Rₐ der glatten Oberfläche ist.

8. Anlage nach Anspruch 7, **dadurch gekennzeichnet, dass** die Veränderung des Oberflächenzustandes einer Rolle durch Kugelstrahlen oder Sandstrahlen oder Satinieren, insbesondere mit Hilfe von Aluminiumoxidkörnern vom Typ Korund und/oder von Glaskugeln, mit einer Korngröße beispielsweise in der Größenordnung von 10 bis 500 µm vollzogen wird.
